(19) Europäisches Patentamt
European Patent Office
Office européen des brevets

(11) EP 2 408 055 A1

(12) **EUROPEAN PATENT APPLICATION**
published in accordance with Art. 153(4) EPC

(43) Date of publication:
**18.01.2012 Bulletin 2012/03**

(21) Application number: **10750796.4**

(22) Date of filing: **08.03.2010**

(51) Int Cl.:
***H01M 12/06*** (2006.01) ***H01M 12/08*** (2006.01)

(86) International application number:
**PCT/JP2010/053808**

(87) International publication number:
**WO 2010/104043 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.03.2009 JP 2009055641**

(71) Applicant: **Sumitomo Chemical Company, Limited**
**Tokyo 104-8260 (JP)**

(72) Inventors:
- **SATO, Takashi**
  **Tsukuba-shi**
  **Ibaraki 305-0035 (JP)**
- **YAMAMOTO, Taketsugu**
  **Tsukuba-shi**
  **Ibaraki 305-0045 (JP)**

(74) Representative: **Brunetti, Fabrizio et al**
**Cabinet Beau de Loménie**
**158, rue de l'Université**
**75340 Paris Cedex 07 (FR)**

(54) **AIR BATTERY**

(57) There is provided an air battery that has sufficient discharge performance and can withstand prolonged use. The air battery having an electrode and a polymer film, wherein the polymer film is situated on the air intake side of the electrode, and the polymer film is a film of a polymer of an alkyne having at least one aromatic group.

***Fig.1***

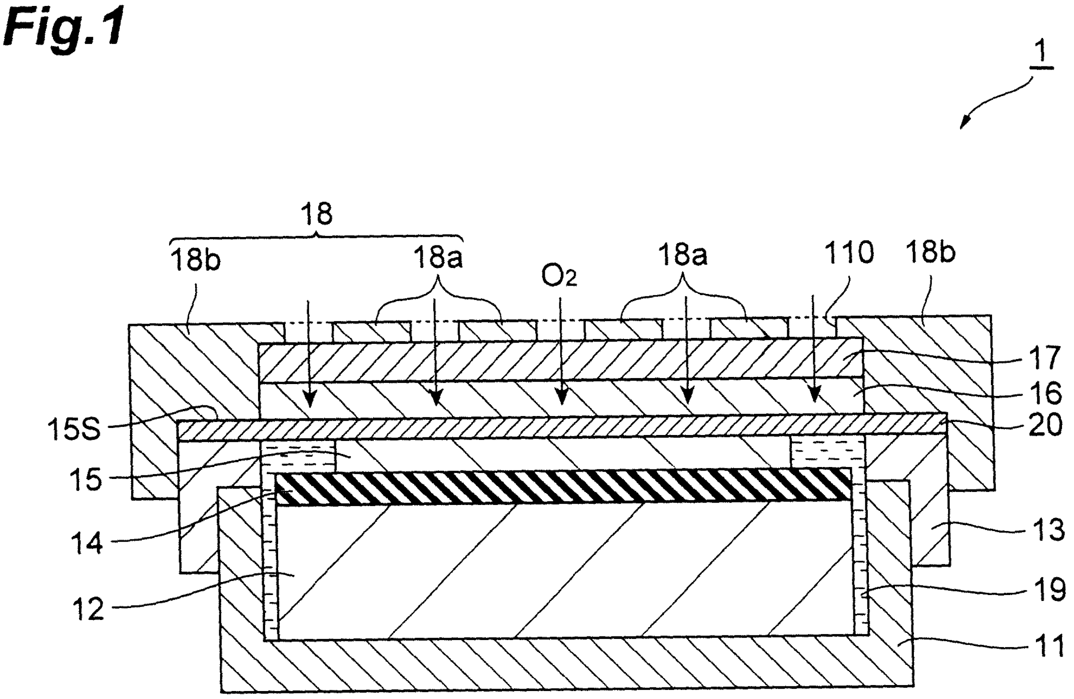




Printed by Jouve, 75001 PARIS (FR)

## Description

### Technical Field

The present invention relates to an air battery.

### Background Art

An air battery is a battery using oxygen as an active material. The air battery has air holes for intake of air and electrodes (air electrodes) that react with oxygen in the received air, and generates electric power using oxygen in the air as the active material. The electrolyte solution in such an air battery generally employs an aqueous solution of alkali such as potassium hydroxide or sodium hydroxide to increase the power density of the battery.

In order to selectively extract oxygen from the air taken in through the air holes, Patent document 1 proposes providing an oxygen-selective permeation film with a plurality of through-holes (permeation holes) formed therein, between the air holes and the air electrodes. In Patent document 2 there is disclosed an oxygen-permeable composite film obtained by applying, on a porous polymer film, a mixture of a solvent-soluble fluorine resin and graphite fluoride being added to a solvent, and then drying them. Also, Patent document 3 discloses a composite film having a polyimide thin-film formed on an alkali-resistant porous film such as a nylon porous film.

[Citation List]

[Patent literature]

[Patent document 1] JP H06-44954A
[Patent document 2] JP H05-200928A
[Patent document 3] JP H03-108256A

### Summary of Invention

### Technical Problem

In an air battery employing an aqueous solution of an alkali such as potassium hydroxide or sodium hydroxide as the electrolyte solution, it is believed that the carbonate produced by infiltration of carbon dioxide in air into the battery inhibits discharge reaction of oxygen, thereby lowering the battery performance including discharge performance. The present inventors considered that it is desirable for an air battery to have a construction that is permeable to oxygen while being poorly permeable to carbon dioxide.

The film disclosed in Patent document 1 has the through-holes (permeation holes) formed in the film as straight lines roughly perpendicular to the film surface, and therefore when gas molecules pass through the film, the distance through which the gas molecules diffuse into the through-holes (permeation holes) is short, such that it is difficult to obtain a sufficient separation effect between oxygen and carbon dioxide, and it is difficult to adequately prevent permeation of carbon dioxide.

Also, the oxygen permeable composite film disclosed in Patent document 2 has large pore sizes, while the adhesion is low between the fluorine resin and graphite fluoride, for example, and voids are generated at the points of contact between the fluorine resin and graphite fluoride, making it difficult to adequately prevent permeation of carbon dioxide. The polyimide film used in the composite film of Patent document 3 has low oxygen permeability and therefore does not easily exhibit an adequate oxygen permeation rate. In addition, the main chains are linked by polar imide bonds, and it is difficult to adequately prevent permeation of carbon dioxide.

In other words, it cannot be said that the conventional films mentioned above sufficiently inhibit permeation of carbon dioxide, and air batteries utilizing such films have been problematic because sufficient discharge performance cannot be obtained and they cannot withstand prolonged use.

It is therefore an object of the present invention to provide an air battery that has sufficient discharge performance and can withstand prolonged use.

### Solution to Problem

The air battery of the invention is an air battery having an electrode and a polymer film, wherein the polymer

film is situated on the air intake side of the electrode, and the polymer film is a film of a polymer of an alkyne having at least one aromatic group. That is, the air battery of the invention has a construction in which gas in air passes through a film of a polymer of an alkyne having at least one aromatic group, and reaches the electrode.

According to the invention, a film of a polymer of an alkyne having at least one aromatic group is situated on the air intake side of the electrode of the air battery, thus allowing the air battery to have a mechanism in which oxygen permeation is facilitated and carbon dioxide permeation is prevented. In other words, the air battery allows higher selectively for permeation of oxygen relative to permeation of carbon dioxide (hereunder referred to as "oxygen/carbon dioxide selective permeability"), and can incorporate oxygen more efficiently into the electrode while minimizing permeation of carbon dioxide.

It is preferable that the aromatic group be a group selected from the group consisting of phenyl group, naphthyl group, antholyl group, pyrenyl group, perylenyl group, pyridinyl group, pyrroyl group, thienyl group and furyl group, or a substituted aromatic group in which at least one of the hydrogen atoms of the selected group is replaced. If the aromatic group is one of these groups, the oxygen/carbon dioxide selective permeability of the polymer film of the invention will be further improved.

It is more preferable that the aromatic group be a phenyl group or a substituted phenyl group.

If the aromatic group is a phenyl group or a substituted phenyl group, the oxygen/carbon dioxide selective permeability of the polymer film of the invention will be still further improved, and it will be possible to inhibit time-related changes in the polymer so that an air battery able to withstand prolonged use can be obtained.

It is preferable that the polymer be a polyacetylene comprising a repeating unit represented by the following formula (1).

[Chemical Formula 1]

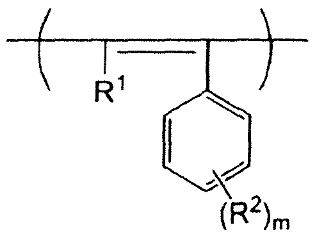

· · · (1)

In formula (1), $R^1$ represents a hydrogen atom, a halogen atom, an optionally substituted alkyl group, an optionally substituted aromatic hydrocarbon group, an optionally substituted aromatic heterocyclic group, a trialkylsilyl group or a trialkylgermyl group, $R^2$ represents any monovalent group, m is an integer of from 0 to 5, and when a plurality of $R^2$ are present they may be the same as or different from each other.

If the polymer of the invention is a polyacetylene comprising a repeating unit represented by (1) above, it will be possible to further improve the oxygen/carbon dioxide selective permeability of the polymer film of the invention and inhibit time-related change in the polymer, so that an air battery capable of withstanding more prolonged use can be obtained.

It is preferable that $R^2$ be a hydrogen atom, a halogen atom, an optionally substituted alkyl group, an optionally substituted aromatic hydrocarbon group, an optionally substituted aromatic heterocyclic group, a trialkylsilyl group or a trialkylgermyl group, it is more preferable that $R^2$ be a hydrogen atom, a halogen atom, an optionally substituted alkyl group or a trialkylsilyl group, and it is even more preferable that a hydrogen atom, a fluorine atom, or a fluorine atom-substituted alkyl group. If $R^2$ is one of these groups, it will be possible to further improve the oxygen/carbon dioxide selective permeability of the polymer film of the invention and inhibit time-related change in the polymer, so that an air battery capable of withstanding more prolonged use can be obtained. The polymer will also be readily soluble in various organic solvents, so that it will be easy to obtain a film.

It is most preferable that $R^2$ be a group represented by the following formula (3).

$$-(CF_2)_pF \qquad (3)$$

In formula (3), p is an integer of from 0 to 15, and it is preferable that p be an integer of from 5 to 15. If p is in this range, it will be possible to still further improve the oxygen/carbon dioxide selective permeability of the polymer film of the invention and inhibit time-related change in the polymer, so that an air battery capable of withstanding especially prolonged use can be obtained. The polymer will also be readily soluble in various organic solvents, so that it will be

easy to obtain a film and the obtained film will have excellent hydrophobicity and water-repellency.

It is preferable that $R^1$ be a phenyl group or a substituted phenyl group, represented by the following formula (2).

[Chemical Formula 2]

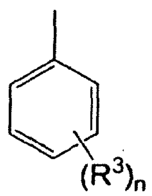

· · · (2)

In formula (2), $R^3$ represents any monovalent group, n is an integer of from 0 to 5, and when a plurality of $R^3$ are present, they may be the same as or different from each other.

It is preferable that $R^3$ represent a hydrogen atom, a halogen atom, an optionally substituted alkyl group, an optionally substituted aromatic hydrocarbon group, an optionally substituted aromatic heterocyclic group, a trialkylsilyl group or a trialkylgermyl group. If $R^3$ is one of these structures, it will be possible to further improve the oxygen/carbon dioxide selective permeability of the polymer film of the invention and inhibit time-related change in the polymer, so that an air battery capable of withstanding more prolonged use can be obtained.

It is more preferable that $R^3$ be a hydrogen atom, a halogen atom, an optionally substituted alkyl group or a trialkylsilyl group, especially preferably a hydrogen atom, a fluorine atom or a trimethylsilyl group, and it is even more preferable that $R^3$ be a trimethylsilyl group. If $R^3$ is one of these groups, it will be possible to further improve the oxygen/carbon dioxide selective permeability of the polymer film of the invention and the polymer will readily dissolve in various organic solvents and allow a film to be easily obtained.

**Advantageous Effects of Invention**

According to the invention it is possible to provide an air battery that has sufficient discharge performance and can withstand prolonged use.

**Brief Description of Drawings**

Fig. 1 is a schematic cross-sectional view of an air battery according to an embodiment of the invention.

**Description of Embodiments**

The polymer, polymer film and air battery employing the polymer film of the invention will now be explained in detail.

The polymer of the invention is formed from a film of a polymer of an alkyne having at least one aromatic group. The polymer film has ability to allow selective permeation of oxygen and the ability to prevent permeation of carbon dioxide, i.e. it has excellent oxygen/carbon dioxide selective permeability, and functions as an oxygen permeation film for an air battery.

An alkyne having at least one aromatic group is a compound represented by the following formula (4).

[Chemical Formula 3]

$$R^1\text{-C}\equiv\text{C-Ar} \qquad (4)$$

In formula (4), Ar represents an aromatic group and $R^1$ represents any group.

(Ar: aromatic group)

Ar is an atomic group remaining after removing a hydrogen atom bonded to a carbon atom or heteroatom of an aromatic compound. Examples of Ar group include an optionally substituted aromatic hydrocarbon group and an optionally substituted aromatic heterocyclic group.

Throughout the present specification, "aromatic hydrocarbon group" refers to an atomic group remaining after

removing a hydrogen atom bonded to a carbon atom composing the aromatic ring of an aromatic hydrocarbon, and "aromatic heterocyclic group" refers to an atomic group remaining after removing a hydrogen atom bonded to a carbon atom or heteroatom composing the aromatic heterocycle of an aromatic heterocyclic compound. The term "aromatic heterocyclic compound" means an organic compound having an aromatic cyclic structure, wherein the elements composing the ring include not only carbon atoms but also a heteroatom such as an oxygen atom, sulfur atom, nitrogen atom, phosphorus atom, boron atom, silicon atom, selenium atom, tellurium atom or arsenic atom.

Preferred examples of the optionally substituted aromatic hydrocarbon group include a group selected from the group consisting of phenyl group, naphthyl group, antholyl group, pyrenyl group and perylenyl group, or substituents wherein at least some of the hydrogen atoms of these groups have been replaced.

Also, preferred examples of the optionally substituted aromatic heterocyclic group include a group selected from the group consisting of pyridinyl group, pyrrolyl group, thienyl group and furyl group, or substituents wherein at least some of the hydrogen atoms of these groups have been replaced.

In particular, it is more preferable that Ar be a phenyl group or a substituted phenyl group, represented by formula (6) below.

[Chemical Formula 4]

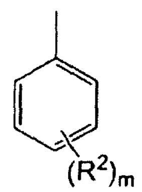

· · · (6)

In formula (6), $R^2$ represents any monovalent group, m is an integer of from 0 to 5, and when a plurality of $R^2$ are present, they may be the same as or different from each other.

In formula (6), it is preferable that $R^2$ represent a hydrogen atom, a halogen atom, an optionally substituted alkyl group, an optionally substituted aromatic hydrocarbon group, an optionally substituted aromatic heterocyclic group, a trialkylsilyl group or a trialkylgermyl group.

The halogen atom for $R^2$ in formula (6) includes a fluorine atom, a chlorine atom, a bromine atom and a iodine atom. A fluorine atom and a chlorine atom are preferred among these.

Examples of the optionally substituted alkyl group for $R^2$ in formula (6) include methyl group, ethyl group, propyl group, butyl group, pentyl group, hexyl group, isopropyl group, isobutyl group, tertiary butyl group, 1-methylpropyl group, isopentyl group, 1-methylbutyl group, 2-methylbutyl group, 1,1-dimethylpropyl group, 1-methylpentyl group, 1,1-dimethylpentyl group and 2-methylpentyl group, and a group in which some or all of the hydrogen atoms have been replaced by halogen atoms. Specific examples of the substituted alkyl group include chloromethyl group, chloroethyl group, chloropropyl group, dichloromethyl group, dichloroethyl group, trichloromethyl group, bromomethyl group, bromoethyl group, bromopropyl group, dibromomethyl group, dibromoethyl group, monofluoromethyl group, monofluoroethyl group, trifluoromethyl group, perfluoroethyl group, perfluoropropyl group, perfluoroisopropyl group, perfluoroisobutyl group, perfluoro-1-methylpropyl group, perfluoropentyl group, perfluorobutyl group, perfluoroisopentyl group, perfluorohexyl group, perfluoroheptyl group, perfluorooctyl group, perfluorononanyl group, perfluorodecyl group, perfluoroundecyl group and perfluorododecyl group. Perfluoro-substituted forms are preferred.

If $R^2$ is one of these groups, it will be possible to further improve the oxygen/carbon dioxide selective permeability of the polymer film of the invention and inhibit time-related change in the polymer, so that an air battery capable of withstanding more prolonged use can be obtained. The polymer will also be readily soluble in various organic solvents, so that it will be easy to obtain a film.

Examples of the optionally substituted aromatic hydrocarbon group for $R^2$ in formula (6) include an unsubstituted aromatic hydrocarbon group and an aromatic hydrocarbon group substituted with a halogen atom, an alkoxy group, an alkyl group, a trialkylsilyl group or a trialkylgermyl group.

Examples of the aromatic hydrocarbon group include that with fused rings, and that having independent benzene rings or 2 or more fused rings bonded by a single bond or a divalent organic group. The number of carbon atoms in the aromatic hydrocarbon group will usually be from 6 to 60, it is preferable that the number be from 6 to 30 and it is more preferable that the number be from 6 to 20. Examples of the aromatic hydrocarbon group include phenyl group, $C_1$-$C_{12}$ alkoxyphenyl group, $C_1$-$C_{12}$ alkylphenyl group, trialkylsilylphenyl group, trialkylgermylphenyl group, 1-naphthyl group,

2-naphthyl group, 1-antholyl group, 2-antholyl group, 9-antholyl group, pyrenyl group, perylenyl group and pentafluorophenyl group, preferably, phenyl group, $C_1$-$C_{12}$ alkylphenyl group and trialkylsilylphenyl group among them.

Examples of the optionally substituted aromatic heterocyclic groups for $R^2$ in formula (6) include an unsubstituted monovalent aromatic heterocyclic group, and a monovalent aromatic heterocyclic group substituted with substituents such as alkyl groups.

The number of carbon atoms in the monovalent aromatic heterocyclic group will usually be from 4 to 60, it is preferable that the number of carbon atoms be from 4 to 30 and it is more preferable that the number of carbon atoms about from 4 to 20, not including the number of carbon atoms of the substituents. Monovalent aromatic heterocyclic groups include thienyl groups, $C_1$-$C_{12}$ alkylthienyl groups, pyrroyl groups, furyl groups, pyridyl groups, $C_1$-$C_{12}$ alkylpyridyl groups, pyridazyl groups, pyrimidyl groups and pyrazinyl groups.

Examples of the Trialkylsilyl group for $R^2$ in formula (6) include trimethylsilyl, triethylsilyl group, tri-isopropylsilyl group, dimethyl-isopropylsilyl group, diethyl-isopropylsilyl group, pentyldimethylsilyl group, hexyldimethylsilyl group, heptyldimethylsilyl group, octyldimethylsilyl group, octyldiethylsilyl group, 2-ethylhexyldimethylsilyl group, nonyldimethylsilyl group, decyldimethylsilyl group, 3,7-dimethyloctyl-dimethylsilyl group and dodecyldimethylsilyl group.

Examples of the Trialkylgermyl group for $R^2$ in formula (6) include trimethylgermyl group, triethylgermyl group, triisopropylgermyl group, dimethyl-isopropylgermyl group, diethylisopropylgermyl group, pentyldimethylgermyl group, hexyldimethylgermyl group, heptyldimethylgermyl group, octyldimethylgermyl group, octyldiethylgermyl group, 2-ethylhexyldimethylgermyl group, nonyldimethylgermyl group, decyldimethylgermyl group, 3,7-dimethyloctyl-dimethylgermyl group and dodecyldimethylgermyl group.

It is more preferable that $R^2$ be a hydrogen atom, a halogen atom, an optionally substituted alkyl group or a trialkylsilyl group.

It is even more preferable that $R^2$ be a hydrogen atom, a fluorine atom, or a fluorine-substituted alkyl group.

If $R^2$ is one of these groups, it will be possible to even further improve the oxygen/carbon dioxide selective permeability of the polymer film of the invention and the polymer will readily dissolve in various organic solvents and allow a film to be easily obtained.

It is most preferable that $R^2$ be a group represented by the following formula (3).

$$-(CF_2)_pF \qquad (3)$$

In formula (3), p is an integer of from 0 to 15.

It is even more preferable that p be an integer of from 5 to 15.

If p is in this range, it will be possible to still further improve the oxygen/carbon dioxide selective permeability of the polymer film of the invention and inhibit time-related change in the polymer, so that an air battery capable of withstanding especially prolonged use can be obtained. The polymer will also be readily soluble in various organic solvents, so that it will be easy to obtain a film and the obtained film will have excellent hydrophobicity and water-repellency.

($R^1$ group)

In formula (4), it is preferable that $R^1$ be a hydrogen atom, a halogen atom, an optionally substituted alkyl group, an optionally substituted aromatic hydrocarbon group, an optionally substituted aromatic heterocyclic group, a trialkylsilyl group or a trialkylgermyl group. It may also be a group represented by the following formula (7), for example.

[Chemical Formula 5]

$$-C{\equiv}C-R^4 \qquad (7)$$

In formula (7), $R^4$ represents any group. Examples for $R^4$ include an optionally substituted aromatic hydrocarbon group and an optionally substituted aromatic heterocyclic group.

It is preferable that $R^1$ be a phenyl group or a substituted phenyl group, represented by the following formula (2).

[Chemical Formula 6]

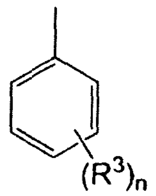

· · · (2)

In formula (2), $R^3$ represents any monovalent group, n is an integer of from 0 to 5, and when a plurality of $R^3$ are present, they may be the same as or different from each other.

If $R^1$ is one of these structures, it will be possible to further improve the oxygen/carbon dioxide selective permeability of the polymer film of the invention and inhibit time-related change in the polymer, so that an air battery capable of withstanding more prolonged use can be obtained.

It is preferable that the $R^3$ group be the same as $R^2$ mentioned above. Among such groups, it is preferable that $R^3$ be a hydrogen atom, a fluorine atom or a trialkylsilyl group, and is most preferably a trimethylsilyl group.

If $R^3$ is one of these groups, it will be possible to further improve the oxygen/carbon dioxide selective permeability of the polymer film of the invention and the polymer will readily dissolve in various organic solvents and allow a film to be easily obtained.

When $R^1$ and Ar are phenyl groups, for example, such an alkyne is diphenylacetylene, and when $R^1$ is a substituent represented by formula (7), for example, it is diacetylene.

[Polymer]

The polymer of an alkyne of the invention is the polymer of the aforementioned alkyne. Specifically, splitting one bond of the alkyne triple bond produces two bonding sites, and each of the two bonding sites bonds with one of two bonding sites produced by splitting a bond in the same manner at triple bonds of two other alkyne, thereby forming a polymer of the alkyne.

When the alkyne is diacetylene, the polymer of the alkyne is poly(diacetylene). When neither $R^1$ nor Ar of the alkyne contains a triple bond, the polymer is polyacetylene, having a repeating unit represented by the following formula (8).

[Chemical Formula 7]

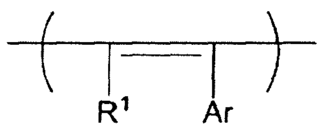

· · · (8)

The plurality of repeating units represented by formula (8) in the polyacetylene may have the $R^1$ and Ar group whose positions are inverted left to right. The plurality of repeating units represented by formula (8) in the polymer may each independently be cis or trans forms. Cis or trans forms can be identified by Raman spectrophotometry of the polymer film.

A polyacetylene may contain repeating units other than the repeating unit represented by formula (8), but from the viewpoint of oxygen/carbon dioxide selective permeability, it is preferable that the content of the repeating unit represented by formula (8) be 1% by weight or greater, it is more preferable that the content be 10% by weight or greater and 100% by weight or less, and it is even more preferable that the content be 50% by weight or greater and 100% by weight or less, based on the total repeating units.

From the viewpoint of film formability, it is preferable that the weight-average molecular weight ($M_w$) of the polymer be $1 \times 10^3$ or greater and $5 \times 10^7$ or less, it is more preferable that the weight-average molecular weight be $1 \times 10^4$ or greater and $2 \times 10^7$ or less, and it is even more preferable that the weight-average molecular weight be 1 ×

$10^5$ or greater and $1 \times 10^7$ or less. From the same viewpoint, it is preferable that the number-average molecular weight ($M_n$) of the polymer be $1 \times 10^3$ or greater and $2 \times 10^7$ or less, it is more preferable that the number-average molecular weight be $1 \times 10^4$ or greater and $1 \times 10^7$ or less, and it is even more preferable that the number-average molecular weight be $1 \times 10^5$ or greater and $5 \times 10^6$ or less. It is preferable that the variance ratio ($M_w/M_n$) which represents the degree of molecular weight distribution of the polymer be 1.0 or greater and 10.0 or less, it is more preferable that the variance ratio be 1.1 or greater and 8.0 or less, and it is even more preferable that the variance ratio be 1.1 or greater and 5.0 or less. According to the invention, the weight-average molecular weight ($M_w$), number-average molecular weight ($M_n$) and variance ratio ($M_w/M_n$) of the polymer is determined based on polystyrene, by chromatography using tetrahydrofuran as the solvent. The column used may be "GPC KF-807L" of the KF-800 Series by Shodex.

From the viewpoint of thermostability, it is preferable that the 5% weight reduction temperature ($T_{d5}$) of the polymer be 380°C or higher and 550°C or lower, it is more preferable that the 5% weight reduction temperature be 390°C or higher and 500°C or lower and it is even more preferable that the 5% weight reduction temperature be 400°C or higher and 490°C or lower. The 5% weight reduction temperature of the polymer is the value measured by thermogravimetry (using a differential thermal/thermogravimetry apparatus, Model DTG-60/60H by Shimadzu Corp.). The temperature-elevating rate during measurement is 10°C/min, with temperature elevation under a nitrogen atmosphere.

In particular, it is preferable that the polymer be a polyacetylene comprising a repeating unit represented by the following formula (1).

[Chemical Formula 8]

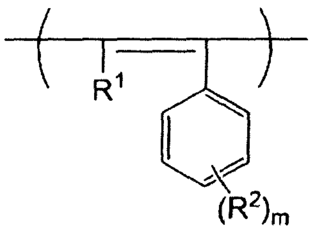

· · · (1)

In formula (1), $R^1$ represents a hydrogen atom, a halogen atom, an optionally substituted alkyl group, an optionally substituted aromatic hydrocarbon group, an optionally substituted aromatic heterocyclic group, a trialkylsilyl group or a trialkylgermyl group, $R^2$ represents any monovalent group, m is an integer of from 0 to 5, and when a plurality of $R^2$ are present they may be the same as or different from each other.

From the viewpoint of the oxygen/nitrogen selective permeability, it is preferable that the content of repeating units represented by formula (1) in the polyacetylene polymer be 20% by weight or greater and 60% by weight or less, based on the total repeating units.

There are no particular restrictions on the polymerization method of the alkyne, and for example, it may be accomplished using a Ziegler-Natta catalyst, or using a tungsten chloride-tetrabutyltin-based catalyst.

The polymer of the invention was explained above, and since the polymer has a high oxygen/carbon dioxide selective permeability, it can be used as an oxygen permeation film for an air battery.

A polymer film to be used in an air battery of the invention formed from the polymer described above will now be described.

[Polymer film]

The polymer is dissolved to a content of 0.5 to 2% by weight in an organic solvent such as toluene, anisole, chlorobenzene, dichlorobenzene, chloroform or tetrahydrofuran and cast onto a glass plate, and the solvent is slowly evaporated off at room temperature. After evaporation and drying of the solvent, the obtained film may be released to obtain a selfstanding polymer film.

From the viewpoint of inhibiting permeation of carbon dioxide and ensuring selective permeability of oxygen, it is preferable that the polymer film have a film thickness of 0.1 μm or more and 100 μm or less, and it is more preferable that the polymer film have a film thickness of 0.1 μm or more and 50 μm or less. If the film thickness is thinner than 0.1 μm, the distance through which the gas molecules diffuse into the film will be shortened, and it will tend to be difficult to obtain a sufficient separation effect between oxygen and carbon dioxide. If the film thickness is greater than 100 μm, the oxygen permeation rate will tend to be lowered. The film thickness may be measured using a micrometer or the like.

An air battery of the invention will now be explained.

[Air battery]

Fig. 1 is a schematic cross-sectional view of a coin-type air battery 1 employing the aforementioned polymer film as an oxygen permeation film. The air battery comprises an anode case 11, an anode 12, an insulating gasket 13, a separator 14, an air electrode (cathode) 15, a collector 20, an electrolyte solution 19, a water-repellent film 16, an oxygen permeation film 17 and a cathode case 18. The cathode case 18 has air permeation sections 18a and a fixed part 18b which integrates an oxygen permeation film 17, a water-repellent film 16, and a electric power generator composed of an anode case 11, an anode 12, a separator 14, an air electrode (cathode) 15, a collector 20 and an electrolyte solution 19.

The anode 12 fills the interior of the anode case 11, and a ringshaped insulating gasket 13 engages with the periphery of the opening of the anode case.

The separator 14 lies between the cathode and the anode, and the air electrode (cathode) 15 is situated with one side facing the separator 14 and the other side facing the collector 20. The stack comprising the anode 12/separator 14/air electrode (cathode) 15 situated in this manner is immersed in the electrolyte solution 19.

The collector 20 is situated in contact with the air electrode (cathode) 15, while the water-repellent film 16 is situated with one side facing the collector 20 and the other side facing the oxygen permeation film 17. The oxygen permeation film 17 is situated with one side facing the water-repellent film 16 and the other side facing the air permeation sections 18a of the cathode case 18. The air permeation sections 18a of the cathode case can be each situated with one side in which the oxygen permeation film 17 is anchored, and the other side in accessible contact with air outside the battery.

The air permeation sections 18a are sections of the cathode case 18, perpendicular to the direction of oxygen permeation, in which air intake holes 110 are formed. Since sides of the air permeation sections 18a opposite the oxygen permeation film 17 are in a state of accessible contact with air, the air containing oxygen, as the active material of the air electrode (cathode) 15, can be taken in by the air intake holes 110.

The shape of the air battery 1 is not particularly restricted, and it may be, in addition to the aforementioned coin type, a button type, a sheet type, a layered type, a cylindrical type, a flat type or a rectilinear type. It may also be applied for large sizes to be used in electric vehicles and the like. The anode case 11 may be molded to match the shape of the battery, as described above. For example, in the case of coin-type cell such as shown in Fig, 1, the anode case may be formed using a three-layer clad material comprising nickel, stainless steel and copper, with a press worked metal sheet punched out into a circular cylindrical shape with copper as the side being in contact with the electrolyte solution.

The anode 12 used may be a bulky metal used in anodes of common air batteries, such as zinc, aluminum or iron. For example, when an aqueous alkali solution is used as the electrolyte solution 19, the metal comprising the anode reacts with the $OH^-$ ion in the electrolyte solution during discharge, producing a metal oxide and water and releasing electrons thereby.

The separator 14, which can be used, may be a hydrophilic-treated polyolefin-based nonwoven fabric or fluorine resin, specifically including, polytetrafluoroethylene (PTFE), polyvinylidene fluoride (PVDF) or the like. The separator 14 is situated between the anode 12 and the air electrode (cathode) 15.

The air electrode (cathode) 15 may be a mixture of active carbon, manganese oxide and conductive carbon, bound with PTFE. A manganese oxide has a function of increasing the oxidation-reduction ability of oxygen in the air battery. Examples of compounds with such a function include, in addition to manganese oxides, also iridium, iridium oxides, and iridium oxides containing a metal selected from the group consisting of titanium, tantalum, niobium, tungsten and zirconium. These may also be used in combination. A collector 20 is situated in contact with the side of the cathode 15, opposite the separator 14 side. The side of the air electrode (cathode) 15 in contact with the collector 20 is the side 15S to which a gas having a high concentration of oxygen is supplied, and for example, when an aqueous alkali solution is used as the electrolyte solution 19, the oxygen supplied to the side 15S, the water in the electrolyte solution 19 and the electrons supplied by conduction of the collector 20 from the exterior react with each other during discharge, producing $OH^-$ ions that are supplied to the reaction at the anode 12 described above thereby. From the viewpoint of facilitating occurrence of this reaction, it is preferable that the cathode 15 be in porous or mesh form.

From the viewpoint of increasing the power density of the air battery, it is preferable that the electrolyte solution 19 used be a aqueous solution of alkali such as sodium hydroxide or potassium hydroxide. The air taken up into the air electrode 15 contains a trace amount of carbon dioxide, and there is a concern for the $OH^-$ ions in the electrolyte solution 19 to react with the carbon dioxide, potentially decreasing the $OH^-$ content in the electrolyte solution 19 thereby. In response, while an air battery 1 employing the polymer film in the invention as the oxygen permeation film 17 has excellent performance of inhibiting permeation of carbon dioxide, this performance is exhibited even when an aqueous alkali solution is used. The electrolyte solution 19 may be an aqueous solution comprising the aforementioned alkali at a content of at least 20% by mole.

Examples of the collector 20 include stainless steel, nickel, iron or copper. Since the gas with a high oxygen concentration is supplied to the reaction side 15S of the air electrode (cathode) 15 through the collector 20, as mentioned above, it is preferable that the collector 20 be mesh-like or porous.

The water-repellent film 16 situated on the side of the collector 20 opposite the air electrode (cathode) 15 side performs the role of preventing leakage of the electrolyte solution out of the battery, while also blocking water vapor from the air supplied to the air electrode (cathode) 15. Examples of the water-repellent film 20 include a porous polyolefin or fluorine resin film, specifically including polyethylene, polypropylene, polytetrafluoroethylene (PTFE) or polyvinylidene fluoride (PVDF).

The oxygen permeation film 17 is situated on the side of the water-repellent film 16 opposite the collector 20 side. A polymer film of the invention as described above is used as the oxygen permeation film 17. While the air passes through the air holes 110 formed in the oxygen permeation sections 18a of the cathode case, the oxygen permeation film 17 can inhibit permeation of carbon dioxide and selectively allow permeation of oxygen. This allows a gas with a high oxygen concentration to be supplied to the reaction side 15S of the air electrode 15, and allows reduction of the battery performance including discharge performance, which results from infiltration of carbon dioxide into the battery and inhibition of the oxygen discharge reaction by carbonates produced thereby, to be further prevented.

From the viewpoint of moldability, it is preferable that the material of the cathode case 18 be, for example, nickel-plated iron or stainless steel. The number of air holes 110 formed in the air permeation section 18a is not particularly restricted, and it may be of a level formed in common air batteries. Specifically, approximately from 2 to 8, for example, may be formed per 1 $cm^2$ of the air permeation section 18a.

The fixed part 18b is attached to the edge potions and sides of the surface of the collector 20 and to the sides of the insulating gasket 13 near the collector 20, by caulking or the like using a caulking machine or the like, and the entire air battery 1 is thus hermetically sealed and integrated.

An air battery of the invention inhibits infiltration of carbon dioxide in the air into the battery and selectively takes in oxygen in the air into the battery, so that an air battery with sufficient discharge performance and capable of withstanding prolonged use can be provided. The air battery of the invention can be used as a primary battery as described above, or as a secondary battery.

The air battery of the invention may be used in a hearing aid, mobile device, mobile PC, automobile, stationary power source, or the like.

## Examples

[Example 1]

After adding tetra-n-butyltin (215 μL, 6.55 × $10^{-2}$ mmol) to a solution of tantalum pentachloride (143 mg, 0.399 mmol) in toluene (17.1 mL) under a nitrogen atmosphere, the mixture was stirred at 80°C for 10 minutes. A separately prepared toluene solution (4.27 mL) containing 4-trimethylsilyldiphenylacetylene (1.07 g, 4.27 mmol) was added to the aforementioned toluene solution, and the mixture was stirred at 80°C for 3 hours to obtain product A. Chloroform (400 mL) was further added to dissolve the product A, and the chloroform solution dissolving the product A was added to 2400 mL of an acetone/chloroform mixture (acetone:chloroform = 1:5 (volume ratio)), for precipitation of the target polymer. The precipitate was recovered by filtration, and dried under reduced pressure overnight to obtain a reddish brown polymer at a yield of 67.8% (0.725 g). The obtained polymer was soluble in common organic solvents such as toluene, chloroform or tetrahydrofuran (hereunder, "THF").

The $^1$H NMR spectrum of the obtained polymer exhibited an extremely broad peak. Observation by $^{13}$C NMR was difficult. The IR spectrum was as follows. IR (Film) $\nu$ = 3053($\nu_{C\text{-}H}$) $cm^{-1}$, 3016-2897($\nu_{Ph\text{-}H}$) $cm^{-1}$,1596($\nu_{C=C}$) $cm^{-1}$, 1492-1387($\nu_{PhC=C}$) $cm^{-1}$, 1247($\delta_{SiC\text{-}H}$) $cm^{-1}$, 1117($\nu_{Si\text{-}CH3}$) $cm^{-1}$, 854($_{1,4\text{-}Ph}$) $cm^{-1}$, 834($\nu_{Si\text{-}CH3}$) $cm^{-1}$, 689($\nu_{Si\text{-}Ph}$) $cm^{-1}$, 552($\nu_{Ph\ C\text{-}H}$) $cm^{-1}$

The $M_w$, $M_n$, $M_w/M_n$ values for the obtained polymer, and the 5% weight reduction temperature ($T_{d5}$), were as follows.

$$M_w = 11.3 \times 10^6$$

$$M_n = 5.89 \times 10^6$$

$$M_w/M_n = 1.92$$

$$T_{d5} = 399°C$$

A toluene solution of the obtained polymer was prepared (1.0% by weight) and cast onto a glass plate, and the solvent was slowly evaporated off at room temperature. After drying off the solvent by evaporation, the film was released and a selfstanding polymer film (polymer film for Example 1) was obtained. The thickness of the polymer film determined with a micrometer was 69 μm. The main reaction formula for Example 1 is shown below.

[Chemical Formula 9]

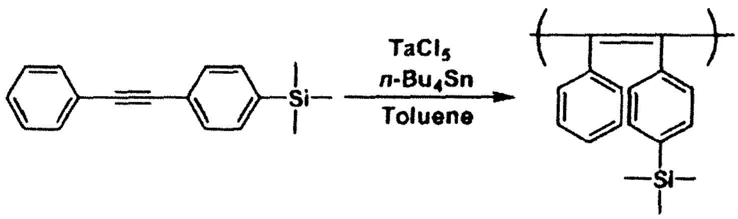


[Example 2]

After adding tetra-n-butyltin (115 μL, 0.349 mmol) to a solution of tantalum pentachloride (62.5 mg, 0.175 mmol) in toluene (5 mL) under a nitrogen atmosphere, the mixture was stirred at 80°C for 10 minutes. A separately prepared toluene solution (3.27 mL) containing 4-trimethylsilylphenyl-2,5-difluorophenylacetylene (500 mg, 1.75 mmol) was added to the aforementioned toluene solution, and the mixture was stirred at 80°C for 3 hours to obtain product B. Chloroform (400 mL) was further added to dissolve the product B, and the chloroform solution dissolving the product B was added to 2400 mL of an acetone/chloroform mixture (acetone:chloroform = 1:5 (volume ratio)), for precipitation of the target polymer. The precipitate was recovered by filtration, and dried under reduced pressure overnight to obtain a reddish brown polymer at a yield of 75.6% (0.378 g). The obtained polymer was soluble in common organic solvents such as toluene, chloroform or THF.

The $^{1}H$ NMR spectrum of the obtained polymer exhibited an extremely broad peak. Observation by $^{13}C$ NMR was difficult. The IR spectrum was as follows. IR (Film) ν = 3073, 3015 (ring C-H), 2956,2898 (C-H), 1618,1590,1491, 1416 (ring C = C), 1247 (δSiC-H), 1115(νSi-$CH_3$), 852, 816(δSi-$CH_3$)$cm^{-1}$

The $M_w$, $M_n$, $M_w/M_n$ values for the obtained polymer, and the 5% weight reduction temperature ($T_{d5}$), were as follows.

$$M_w = 2.6 \times 10^6$$

$$M_n = 4.64 \times 10^5$$

$$M_w/M_n = 5.6$$

$$T_{d5} = 369°C$$

A toluene solution of the obtained polymer was prepared (1.0% by weight) and cast onto a glass plate, and the solvent was slowly evaporated off at room temperature. After evaporation and drying of the solvent, the film was released to obtain a selfstanding polymer film.

The obtained polymer film was subjected to desilylation reaction. Specifically, the film was immersed for 24 hours in a mixture of trifluoroacetic acid/hexane (trifluoroacetic acid:hexane = 1:1 (volume ratio)), and then for 24 hours in a mixture of triethylamine/hexane (triethylamine:hexane = 1:1 (volume ratio)). Finally it was immersed in methanol for 24 hours and the film was dried at room temperature. A desilylated polymer film (polymer film for Example 2) was thus obtained. The thickness of the film determined with a micrometer was 43 μm. The main reaction formula for Example 2 is shown below.

[Chemical Formula 10]

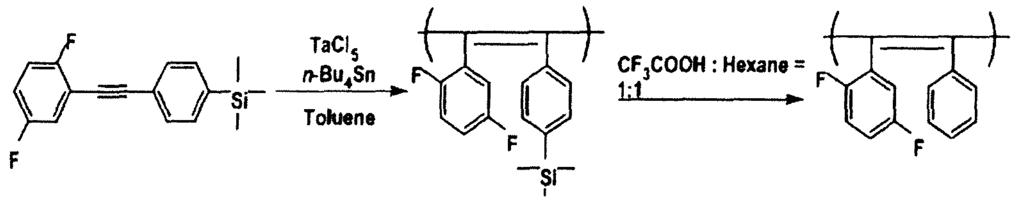


[Example 3]

The polymer film of Example 1 (8.23 mg, 0.0329 mmol) was immersed in 0.66 mL of a mixture of dichloromethane/acetonitrile (dichloromethane:acetonitrile = 3:2 (volume ratio)) containing (perfluorodecyl)phenyliodonium trifluoromethanesulfonate (24.3 mg, 0.0329 mmol) and pyridine (2.67 μL, 0.0329 mmol), for 5 minutes at 80°C under an air atmosphere. The film was removed from the mixture, further immersed in methanol for 1 hour and then dried at room temperature to obtain a polymer film for Example 3. The thickness of the film determined with a micrometer was 87 μm.

The obtained polymer film was confirmed to have a CF bond-derived peak at 1200 $cm^{-1}$, based on the IR spectrum. It was also insoluble in common organic solvents. The main reaction formula for Example 3 is shown below.

[Chemical Formula 11]

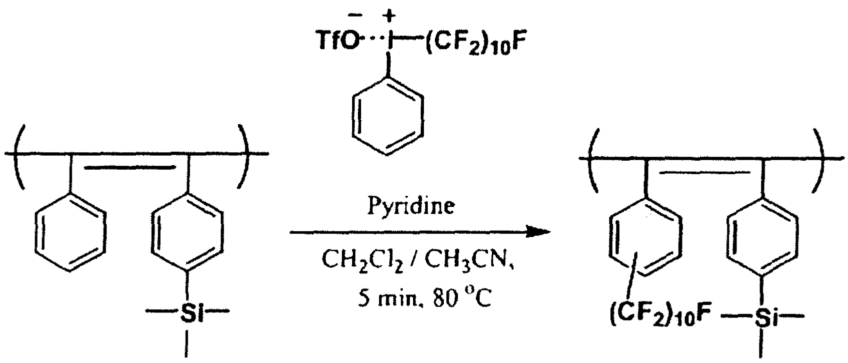


[Comparative Example 1]

A 50 μm-thick polydimethylsiloxane film (trade name: Silicon film 6-9085-01 by As One Corp.) was prepared.

[Comparative Example 2]

A 45 μm-thick polyimide film was prepared (trade name: UPILEX-S® by Ube Industries, Ltd.).

[Evaluation of polymer films (Gas permeation test)]

The polymer films of Examples 1 to 3 and Comparative Examples 1 and 2 were measured for oxygen and

carbon dioxide gas permeability coefficients ($P_{O2}$ and $P_{CO2}$, units: $cm^3$(STP)·cm/$cm^2$.sec.cmHg) using a gas permeability meter (GTR-30X by GTR Tec Corp.) at 23°C, 60% humidity. The measured $P_{O2}$ and $P_{CO2}$ values were used to calculate $\alpha_{O2/CO2}$ ($P_{O2}$/$P_{CO2}$), indicating the oxygen/carbon dioxide selective permeability. Table 1 shows the evaluation results for the films of Examples 1 to 3 and Comparative Examples 1 and 2.

[Table 1]

| | Permeability coefficient* | | Oxygen/carbon dioxide selective permeability |
|---|---|---|---|
| | $P_{O2}$ | $P_{CO2}$ | $\alpha_{O2/CO2}$ |
| Example 1 | 940 | 4300 | 0.22 |
| Example 2 | 1520 | 4960 | 0.31 |
| Example 3 | 5140 | 12400 | 0.41 |
| Comp. Ex. 1 | 620 | 3150 | 0.20 |
| Comp. Ex. 2 | 0.032 | 0.24 | 0.13 |
| * Units: $1 \times 10^{-10}$ $cm^3$(STP)cm/$cm^2$·s·cmHg | | | |

Based on these results, it was confirmed that the polymer films of Examples 1-3 have superior oxygen/carbon dioxide selective permeabilities compared to the polymer films of Comparative Examples 1 and 2.

[Evaluation of air battery performance (discharge test)]

As shown in Fig. 1, batteries incorporating the polymer films of Examples 1-3 and Comparative Examples 1 and 2 as the oxygen permeation film 17 (Examples 4-6 and Comparative Examples 3 and 4, respectively), were each placed in a 10% $CO_2$-90 $O_2$ Tedlar bag and set in a charge-discharge tester (Model TYS-30TU00 by Toyo System Co., Ltd.), for CC (constant current) discharge at 0.2 mA, with cut-off at a final voltage of 0.1 V For Comparative Example 5, the same measurement was conducted without using an oxygen permeation film.

[Example 4]

A discharge test was conducted using a battery incorporating the polymer film of Example 1: poly(4-trimethylsilyldiphenylacetylene) as the oxygen permeation film. As a result, 63 hours of discharge was conducted.

[Example 5]

A discharge test was conducted using a battery incorporating the polymer film of Example 2: poly(2,5-difluorodiphenylacetylene) as the oxygen permeation film. As a result, 69 hours of discharge was conducted.

[Example 6]

A discharge test was conducted using a battery incorporating the polymer film of Example 3: poly(4-trimethylsilyldiphenylacetylene) with perfluorodecyl groups, as the oxygen permeation film. As a result, 75 hours of discharge was conducted.

[Comparative Example 3]

A discharge test was conducted using a battery incorporating the polydimethylsiloxane of Comparative Example 1 as the oxygen permeation film. As a result, 53 hours of discharge was conducted.

[Comparative Example 4]

A discharge test was conducted using a battery incorporating the polyimide of Comparative Example 2 as the oxygen permeation film. As a result, 2 hours of discharge was conducted.

[Comparative Example 5]

As a result of a discharge test without setting an oxygen permeation film, 38 hours of discharge was conducted.

Based on these results, it was clear that Examples 4 to 6, which incorporated the poly(diphenylacetylene) derivatives of Examples 1 to 3 as oxygen permeation films in air batteries, allow permeation of oxygen while preventing permeation of carbon dioxide, have sufficient discharge performance, and can withstand prolonged use.

[Example 7]

The polymer film of Example 1 (35.5 mg, 0.143 mmol) was immersed in 16.6 mL of a mixture of dichloromethane/acetonitrile (dichloromethane:acetonitrile = 3:2 (volume ratio)) containing (perfluorodecyl)phenyliodonium trifluoromethanesulfonate (124 mg, 0.172 mmol) and pyridine (13.6 $\mu$L, 0.176 mmol), for 5 minutes at 80°C under an air atmosphere. The film was removed from the mixture, further immersed in methanol for 1 hour and then dried at room temperature to obtain a polymer film for Example 7. The thickness of the film determined with a micrometer was 133 $\mu$m.

The obtained polymer film was confirmed to have a CF bond-derived peak at 1218 $cm^{-1}$, based on the IR spectrum. It was also insoluble in common organic solvents. Elemental analysis confirmed that perfluorododecyl groups had been introduced into 24% of the monomer units of the polymer.

[Example 8]

The polymer film of Example 1 (21.1 mg, 0.0843 mmol) was immersed in 16.6 mL of a mixture of dichloromethane/acetonitrile (dichloromethane:acetonitrile = 3:2 (volume ratio)) containing (perfluorodecyl)phenyliodonium trifluoromethanesulfonate (73.5 mg, 0.0843 mmol) and pyridine (6.8 $\mu$L, 0.0843 mmol), for 5 minutes at 80°C under an air atmosphere. The film was removed from the mixture, further immersed in methanol for 1 hour and then dried at room temperature to obtain a polymer film for Example 8. The thickness of the film determined with a micrometer was 37 $\mu$m.

The obtained polymer film was confirmed to have a CF bond-derived peak at 1218 $cm^{-1}$, based on the IR spectrum. It was also insoluble in common organic solvents. Elemental analysis confirmed that perfluorododecyl groups had been introduced into 41% of the monomer units of the polymer.

[Example 9]

The polymer film of Example 1 (28.2 mg, 0.133 mmol) was immersed in 16.6 mL of a mixture of dichloromethane/acetonitrile (dichloromethane:acetonitrile = 3:2 (volume ratio)) containing (perfluorodecyl)phenyliodonium trifluoromethanesulfonate (491 mg, 0.563 mmol) and pyridine (45.3 $\mu$L, 0.563 mmol), for 5 minutes at 80°C under an air atmosphere. The film was removed from the mixture, further immersed in methanol for 1 hour and then dried at room temperature to obtain a polymer film for Example 9. The thickness of the film determined with a micrometer was 135 $\mu$m.

The obtained polymer film was confirmed to have a CF bond-derived peak at 1218 $cm^{-1}$, based on the IR spectrum. It was also insoluble in common organic solvents. Elemental analysis confirmed that perfluorododecyl groups had been introduced into 59% of the monomer units of the polymer.

[Example 10]

The polymer film of Example 1 (27.8 mg, 0.111 mmol) was immersed in 16.6 mL of a mixture of dichloromethane/acetonitrile (dichloromethane:acetonitrile = 3:2 (volume ratio)) containing (perfluorodecyl)phenyliodonium trifluoromethanesulfonate (484 mg, 0.555 mmol) and pyridine (43.9 $\mu$L, 0.555 mmol), for 5 minutes at 80°C under an air atmosphere. The film was removed from the mixture, further immersed in methanol for 1 hour and then dried at room temperature to obtain a polymer film for Example 10. The thickness of the film determined with a micrometer was 134 $\mu$m.

The obtained polymer film was confirmed to have a CF bond-derived peak at 1218 $cm^{-1}$, based on the IR spectrum. It was also insoluble in common organic solvents. Elemental analysis confirmed that perfluorododecyl groups had been introduced into 62% of the monomer units of the polymer.

[Evaluation of polymer film (Gas permeation test)]

The polymer films of Examples 7 to 10 were measured for oxygen and nitrogen gas permeability coefficients ($P_{O2}$ and $P_{N2}$, units: $cm^3$ (STP)·cm/$cm^2$·sec·cmHg) using a gas permeability meter (GTR-30X by GTR Tec Corp.) at 23°C. The measured $P_{O2}$ and $P_{N2}$ values were used to calculate $\alpha_{O2/N2}$ ($P_{O2}/P_{N2}$), indicating the oxygen/nitrogen selective permeability. The evaluation results for the films of Examples 7 to 10 are shown in Table 2.

[Table 2]

| | Permeability coefficient* | | Oxygen/nitrogen selective permeability |
|---|---|---|---|
| | $P_{O2}$ | $P_{N2}$ | $\alpha_{O2/N2}$ |
| Example 7 | 1240 | 590 | 2.10 |
| Example 8 | 3400 | 1160 | 2.93 |
| Example 9 | 6310 | 3448 | 1.83 |
| Examples 10 | 13500 | 11500 | 1.17 |
| * Units: $1 \times 10^{-10}$ $cm^3$(STP)cm/$cm^2$·s·cmHg | | | |

Thus, an air battery of the invention inhibits infiltration of carbon dioxide in the air into the battery and selectively takes in oxygen in the air into the battery, so that an air battery with sufficient discharge performance and capable of withstanding prolonged use can be provided.

Explanation of Symbols

1: Air battery, 11: anode case, 12: anode, 13: insulating gasket, 14: separator, 15: cathode (air electrode), 16: water-repellent film, 17: oxygen permeation film, 18a, 18b: cathode cases, 19: electrolyte solution, 20: collector, 110: air intake hole.

## Claims

1. An air battery having an electrode and a polymer film, wherein the polymer film is situated on the air intake side of the electrode, and the polymer film is a film of a polymer of an alkyne having at least one aromatic group.

2. The air battery according to claim 1, wherein the aromatic group is a group selected from the group consisting of phenyl group, naphthyl group, antholyl group, pyrenyl group, perylenyl group, pyridinyl group, pyrroyl group, thienyl group and furyl group, or the aromatic group is a substituted aromatic group in which at least one of the hydrogen atoms of the selected group is replaced.

3. The air battery according to claim 1 or 2, wherein the aromatic group is a phenyl group or substituted phenyl group.

4. The air battery according to any one of claims 1 to 3, wherein the polymer is polyacetylene containing a repeating unit represented by the following formula (1):

[Chemical Formula 1]

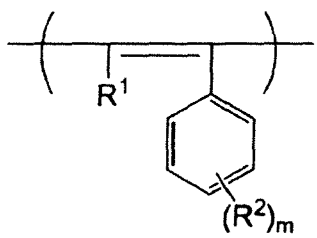

· · · (1)

in formula (1), $R^1$ represents a hydrogen atom, a halogen atom, an optionally substituted alkyl group, an optionally substituted aromatic hydrocarbon group, an optionally substituted aromatic heterocyclic group, a trialkylsilyl group or a trialkylgermyl group, $R^2$ represents any monovalent group, m is an integer of from 0 to 5, and when a plurality of $R^2$ are present they may be the same as or different from each other.

5. The air battery according to claim 4, wherein $R^2$ represents a hydrogen atom, a halogen atom, an optionally substituted

alkyl group, an optionally substituted aromatic hydrocarbon group, an optionally substituted aromatic heterocyclic group, a trialkylsilyl group or a trialkylgermyl group.

**6.** The air battery according to claim 4 or 5, wherein $R^2$ is a hydrogen atom, a halogen atom, an optionally substituted alkyl group or a trialkylsilyl group.

**7.** The air battery according to any one of claims 4 to 6, wherein $R^2$ is a hydrogen atom, a fluorine atom, or a fluorine atom-substituted alkyl group.

**8.** The air battery according to any one of claims 4 to 7, wherein $R^2$ is represented by the following formula (3):

$$-(CF_2)_pF \qquad (3)$$

in formula (3), p is an integer of from 0 to 15.

**9.** The air battery according to claim 8, wherein p is an integer of from 5 to 15.

**10.** The air battery according to any one of claims 4 to 9, wherein $R^1$ is a phenyl group or a substituted phenyl group represented by the following formula (2):

[Chemical Formula 2]

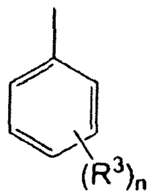

· · · (2)

in formula (2), $R^3$ represents any monovalent group, n is an integer of from 0 to 5, and when a plurality of $R^3$ are present, they may be the same as or different from each other.

**11.** The air battery according to claim 10, wherein $R^3$ represents a hydrogen atom, a halogen atom, an optionally substituted alkyl group, an optionally substituted aromatic hydrocarbon group, an optionally substituted aromatic heterocyclic group, a trialkylsilyl group or a trialkylgermyl group.

**12.** The air battery according to claim 10 or 11, wherein $R^3$ is a hydrogen atom, a halogen atom, an optionally substituted alkyl group or a trialkylsilyl group.

**13.** The air battery according to any one of claims 10 to 12, wherein $R^3$ is a hydrogen atom, a fluorine atom, or a trimethylsilyl group.

**14.** The air battery according to any one of claims 10 to 13, wherein $R^3$ is a trimethylsilyl group.

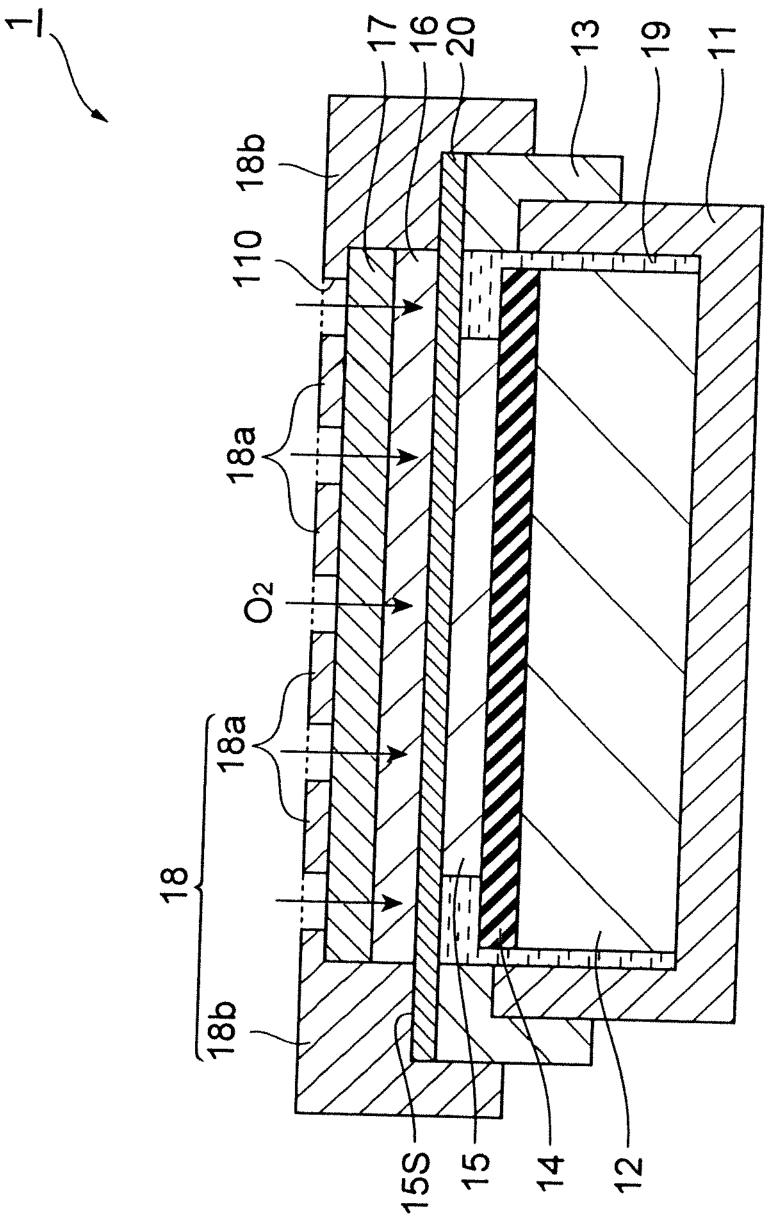


Fig.1

**INTERNATIONAL SEARCH REPORT**

International application No. PCT/JP2010/053808

A. CLASSIFICATION OF SUBJECT MATTER
*H01M12/06*(2006.01)i, *H01M12/08*(2006.01)i

According to International Patent Classification (IPC) or to both national classification and IPC

B. FIELDS SEARCHED

Minimum documentation searched (classification system followed by classification symbols)
H01M12/06, H01M12/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 9-274936 A (Toshiba Battery Co., Ltd., Toshiba Silicone Co., Ltd.), 21 October 1997 (21.10.1997), overall of "Detailed Explanation of the Invention" (Family: none) | 1-14 |
| A | JP 5-121104 A (Toshiba Battery Co., Ltd., Toshiba Silicone Co., Ltd.), 18 May 1993 (18.05.1993), overall of "Detailed Explanation of the Invention" & US 5306578 A | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 May, 2010 (31.05.10) | 15 June, 2010 (15.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/053808

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-47421 A (Matsushita Electric Industrial Co., Ltd.), 26 February 1993 (26.02.1993), overall of "Detailed Explanation of the Invention" (Family: none) | 1-14 |
| A | JP 59-46104 A (Tokyo Shibaura Electric Co., Ltd.), 15 March 1984 (15.03.1984), the entire specification (Family: none) | 1-14 |
| A | JP 59-46103 A (Tokyo Shibaura Electric Co., Ltd.), 15 March 1984 (15.03.1984), the entire specification (Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0644954 A
- JP H05200928 A
- JP H03108256 A